(19) Europäisches Patentamt / European Patent Office / Office européen des brevets

(11) **EP 3 461 013 B1**

(12) **EUROPEAN PATENT SPECIFICATION**

(45) Date of publication and mention
of the grant of the patent:
**11.05.2022 Bulletin 2022/19**

(21) Application number: **16906790.7**

(22) Date of filing: **30.06.2016**

(51) International Patent Classification (IPC):
*H04B 3/32* (2006.01)    *H04B 3/54* (2006.01)

(52) Cooperative Patent Classification (CPC):
**H04B 3/32; H04B 3/54**

(86) International application number:
**PCT/CN2016/088031**

(87) International publication number:
**WO 2018/000390 (04.01.2018 Gazette 2018/01)**

(54) **DATA COMMUNICATION METHOD, DEVICE AND SYSTEM**

VERFAHREN, VORRICHTUNG UND SYSTEM ZUR DATENKOMMUNIKATION

PROCÉDÉ, DISPOSITIF, ET SYSTÈME DE COMMUNICATION DE DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.03.2019 Bulletin 2019/13**

(73) Proprietor: **Huawei Technologies Co., Ltd.
Longgang District
Shenzhen, Guangdong 518129 (CN)**

(72) Inventors:
• **LI, Qiaojie
Shenzhen
Guangdong 518129 (CN)**
• **WEI, Dong
Shenzhen
Guangdong 518129 (CN)**
• **LIU, Yixian
Shenzhen
Guangdong 518129 (CN)**

(74) Representative: **Pfenning, Meinig & Partner mbB
Patent- und Rechtsanwälte
Joachimsthaler Straße 10-12
10719 Berlin (DE)**

(56) References cited:
WO-A1-2015/144538    CN-A- 104 137 429
CN-A- 105 340 188     US-A1- 2014 369 430
US-A1- 2015 009 793    US-A1- 2015 365 256

• "Mitigation of interference between DSL and PLC;
G.9977 (02/16)", ITU-T STANDARD,
INTERNATIONAL TELECOMMUNICATION
UNION, GENEVA ; CH , no. G.9977 (02/16) 26
February 2016 (2016-02-26), pages 1-48,
XP044172479, Retrieved from the Internet:
URL:http://mirror.itu.int/dms/pay/itu-t/re
c/g/T-REC-G.9977-201602-I!!PDF-E.pdf[retrieved
on 2016-04-22]
• "Mitigation of interference between DSL and PLC;
G.9977", ITU-T Standard, 25 April 2016
(2016-04-25), XP044172479,

EP 3 461 013 B1

**Description**

**TECHNICAL FIELD**

The present invention relates to the field of optical communications technologies, and specifically, to a data communication method, an apparatus, and a system.

**BACKGROUND**

A power line communication (Power Line Communication, PLC for short) technology is a communication mode in which a power line is used to transmit data and a speech signal. The technology is to add a high-frequency signal carrying information to a current, and then transmits the current by using a wire. A modem for receiving information separates the high-frequency signal from the current, and transmits the high-frequency signal to a computer or a telephone to implement information transfer. Power line communication includes high-voltage power line communication (which is usually of a voltage level of 35 kV or above), medium-voltage power line communication (which is of a voltage level of 10 kV), or indoor power line communication (with a 380/220 V subscriber line). A focus herein lies in the indoor power line communication. Power line communication does not require any line layout, and allows free access and random movement of a computer location, and therefore has advantages such as plug-and-play. Power line communication is currently widely applied to network expansion at home.

Currently, a main application scenario of the PLC technology appears in use of various digital subscriber line (Digital Subscriber Line, DSL for short) devices during access to a home Internet. DSL is a data transmission technology for transmission over a telephone twisted pair. A PLC device is used at home to perform network topology expansion, for example, the PLC device is used for accessing the Internet in different rooms. However, because frequency spectrums of a PLC device and a DSL terminal device that are inside a user side device are largely overlapped, mutual interference occurs when the two devices are simultaneously used. The PLC device uses a relatively powerful noise resistance technology, and therefore it is generally considered that interference of the PLC device to the DSL terminal device is relatively strong, while interference of the DSL terminal device to the PLC device may be almost ignored.

The existing ITU-T G.9977 (G.dpm) standard "Mitigation of interference between DSL and PLC" provides a mechanism and an interface for resolving a problem of interference between a PLC device and a DSL terminal device that are inside one user equipment. The standard mainly introduces an arbitration function (arbitration function, AF) module to coordinate parameters of a network between the PLC device and the DSL terminal device, so as to eliminate or reduce the interference between the DSL terminal device and the PLC device. However, the standard mainly focuses on a case in which the PLC and DSL terminal devices are located at a same user home, that is, in a single user side device, and the AF module is located in a residential gateway (Residential Gateway, RGW) in the user side device. In other words, the problem of the interference between the PLC device and the DSL terminal device that are inside one user side device is resolved. However, for currently supported application scenarios, in some scenarios such as a dense-unit residence, a PLC device inside one user side device may affect a DSL terminal device inside another user side device. In other words, an existing standard and an existing technology cannot resolve an interference problem in this case. For example, when a PLC device inside one user side device interferes with a DSL terminal device inside another user side device, the two user side devices cannot access a network normally.

US 2014/0369430 A1 describes a server conveniently enabling cross-premises mitigation of PLC transmission at one premise affecting DSL at a neighboring premise. According to the document, two DSL SNR measurements performed while the PLC node is transmitting solo at two distinct power levels are sufficient to compute a new, DSL friendly, PSD for that PLC node.

**SUMMARY**

Embodiments of the present invention provide a data communication method, a related device, and a related system, according to the independent claims to resolve a problem of interference between user side devices, and expand a single-user interference cancellation solution mentioned in an existing standard to a solution that can support multiuser interference cancellation, thereby improving reliability of data transmission between users.

**BRIEF DESCRIPTION OF DRAWINGS**

To describe the technical solutions in the embodiments of the present invention more clearly, the following briefly introduces the accompanying drawings required for describing the embodiments and the prior art. Apparently, the accompanying drawings in the following description show merely some embodiments of the present invention, and a person of ordinary skill in the art may derive other drawings from these accompanying drawings without creative efforts.

FIG. 1 is a schematic diagram of a network architecture of a data communications system according to an embodiment of the present invention;
FIG. 2 shows a data communication method according to an embodiment of the present invention;
FIG. 3 is a schematic structural diagram of a communications device according to an embodiment of the present invention; and

FIG. 4 is a schematic structural diagram of another communications device according to an embodiment of the present invention.

## DESCRIPTION OF EMBODIMENTS

The embodiments of the present invention provide a data communication method, a related device, and a related system, to resolve a problem of out-of-order of data packets received and reassembled by a receiving device caused by a latency of a wavelength path in a next-generation EPON system. Therefore, bit-level latency measurement precision can be achieved for each path of the next-generation EPON system, and the receiving device can implement accurate packet reassembly in any circumstances, thereby significantly improving system reliability.

To make the invention objectives, features, and advantages of the present invention clearer and more comprehensible, the following clearly describes the technical solutions in the embodiments of the present invention with reference to the accompanying drawings in the embodiments of the present invention. Apparently, the embodiments described in the following are merely some rather than all of the embodiments of the present invention. All other embodiments obtained by a person of ordinary skill in the art based on the embodiments of the present invention without creative efforts shall fall within the protection scope of the present invention.

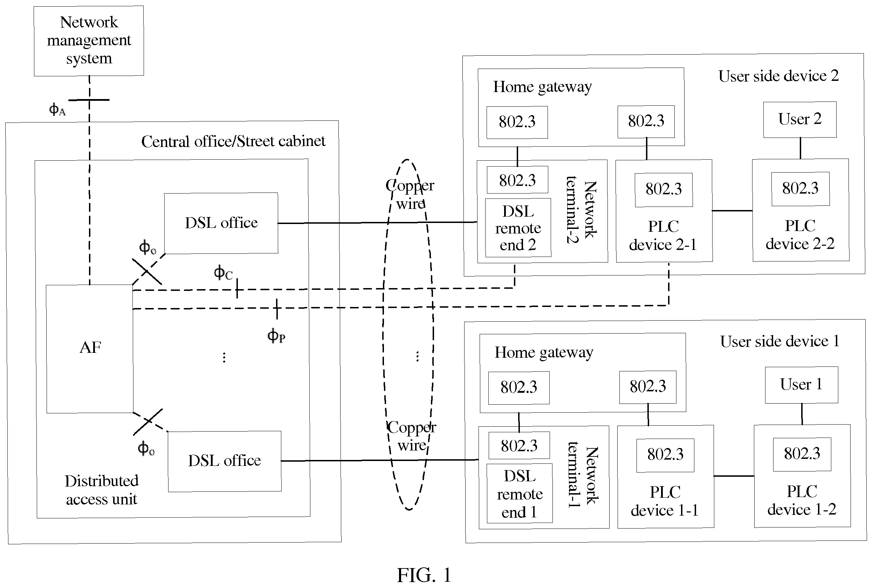

FIG. 1 is a schematic diagram of a network architecture of a data communications system according to an embodiment of the present invention. As shown in FIG. 1, the system may be but is not limited to a digital subscriber line DSL system.

The system includes an office side device and at least two user side devices. There is a plurality of DSL line connections between the office side device and the user side devices, for example, copper wire connections.

The office side device includes a network management system NMS, and the NMS is connected to a central office (Central Office, CO for short) or a street cabinet device. The CO device or the street cabinet device is a network side device such as a vectoring control entity (Vectoring Control Entity, VCE for short), a switch, or a cabinet, and may further include a distributed point unit (Distributed Point Unit, DPU for short). The DPU further includes an arbitration function AF module and a plurality of digital subscriber line DSL office devices.

Any user side device includes a residential gateway (Residential Gateway, RGW), a network terminal (Network Terminal, NT) and/or a power line communication PLC device. Generally, some user side devices may include only a network terminal. The network terminal is connected to the RGW and performs data communication by using the 802.3 protocol. The user side device may be customer-premises equipment (Customer Premises Equipment, CPE for short).

The network terminal may further include a DSL remote device. The DSL remote device communicates with a home network by using the 802.3 protocol.

PLC devices are generally used in pairs, that is, one user side device may include a pair of PLC devices. One PLC device is configured to send a signal, and the other PLC device is configured to receive a signal. One PLC device is connected to the RGW, and performs data communication by using the 802.3 protocol, and the other PLC device is connected to a user, for example, a user is a device such as a notebook computer, and also performs data communication by using the 802.3 protocol.

Further, the AF module adds a logical interface between the AF module and an xTU-O in the DPU, so that the AF module has a global processing capability to coordinate a problem of interference of the PLC device to an xDSL terminal device occurring between a plurality of users. Specifically, the AF module is placed in a digital subscriber line access multiplexer (digital subscriber line access multiplexer, DSLAM) or the DPU, and a new logical interface $\varnothing_O$ between the AF module and each DSL office side device and a new primitive for interaction between the AF module and each DSL office side device are defined. A logical interface between the AF module and the PLC device and a logical interface between the AF module and the NT device may respectively be $\varnothing_P$ and $\varnothing_C$ that are defined by an existing standard. A possible reference model is shown in the FIG.1.

$\varnothing_O$ is a newly added logical interface between the AF module and the xTU-O, and mainly exchanges related information with the xTU-O. For example, the following primitives may be defined on the logical interface $\varnothing_O$. Reference may be made to section 7.6 of the G.dpm standard. Specifically, functions of the primitives are defined as follows:
Status.request.primitive: The AF module sends a request to the DSL office side device to request the network terminal NT or the PLC device to feed back status information.

Status.confirm.primitive: The DSL office side device replies to the AF module to confirm the request.

Measure-mode.request.primitive: The AF module sends a request to the DSL office side device to request the PLC device to start measurement.

Measure-mode.confirm.primitive: The DSL office side device replies to the AF module on whether the measurement request is approved.

Measure.request.primitive: The AF module sends a request to the DSL office side device to request the NT to start measurement.

Measure.confirm.primitive: The DSL office side device replies to the AF module on whether the measurement request is approved.

Completion.request.primitive: The AF module requests a measurement status of the PLC device from the DSL office device.

Completion.confirm.primitive: The DSL office side device replies to the AF module with the measurement status of the PLC device.

Results.request.primitive: The AF module reads, from the DSL office device, measurement data fed back by the NT, where the measurement data is a value of interference of another user side device to the user side device, and may be a signal-to-noise ratio (Signal-to-noise ratio, SNR) or quiet line noise (Quiet Line Noise, QLN).

Results.confirm.primitive: A user replies to the request.

Configure.request.primitive: a primitive sent to the DSL office side device for initiating a change of a sending parameter of the DSL remote device or the PLC device.

Configure.confirm.primitive: a primitive for replying to the configuration request.

Primitives of the logical interfaces $\varnothing_P$ and $\varnothing_C$ may be specified by using the existing G.dpm standard. A specific implementation may be customized by an equipment vendor, for example, an NSF command of an EOC path in G.9701 (G.fast standard) may be used for implementation.

Optionally, for the foregoing application scenario, a scenario in which one user side device uses a PLC device, and another user side device does not use a PLC device may be considered. In this case, it is possible that the user side device that does not use a PLC device does not support the G.dpm standard. In other words, the foregoing application scenario also includes an application scenario in which a user side device includes only an NT device.

It is learned from the diagram of the network architecture in FIG. 1 that, the AF module is located on an office side device side, to facilitate global management on crosstalk between user side devices, especially when a network terminal in one user side device is affected by interference of a PLC device in another user side device, thereby reducing such interference, and greatly improving data communication quality.

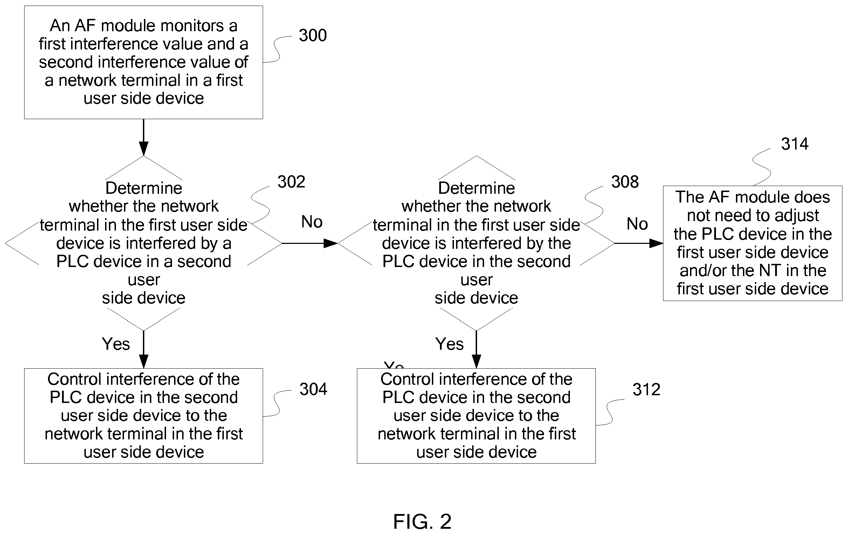

As shown in FIG. 2, the following provides a data communication method based on the network architecture provided in FIG. 1 above. The method is applied to a system that includes an office side device and at least two user side devices. The office side device includes at least one arbitration function AF module. In the at least two user side devices, a first user side device includes a network terminal, and a second user side device includes a power line communication PLC device. The method includes the following steps.

S300. The AF module monitors a first interference value and a second interference value of the network terminal in the first user side device, where the first interference value is an interference value that is of the network terminal in the first user side device and that is detected after PLC devices on all user side devices are disabled, and the second interference value is a value of interference of the PLC device in the second user side device to the network terminal in the first user side device.

S302. The AF module determines, based on the detected first interference value and second interference value of the network terminal in the first user side device, whether the network terminal in the first user side device is interfered with by the PLC device in the second user side device; and if the network terminal in the first user side device is interfered with by the PLC device in the second user side device, step S304 is performed; or if the network terminal in the first user side device is not interfered with by the PLC device in the second user side device, step S308 is performed.

Further, a step in which the AF module determines that the network terminal in the first user side device is interfered with by the PLC device in the second user side device specifically includes:
when a difference between the first interference value and the second interference value is greater than a threshold, determining, by the AF module, that the network terminal in the first user side device is interfered with by the PLC device in the second user side device.

S304. When determining that the network terminal in the first user side device is interfered with by the PLC device in the second user side device, the AF module controls the interference of the PLC device in the second user side device to the network terminal in the first user side device.

Specifically, the controlling the interference of the PLC device in the first user side device to the network terminal in the second user side device specifically includes:
adjusting, by the AF module based on the first interference value and the second interference value, transmit power spectral density PSD of the PLC device in the second user side device and/or initiating online re-configuration OLR of the network terminal in the first user side device.

Optionally, the method may further include the following steps.

S308. When the first user side device further includes a PLC device, the AF module determines whether the network terminal in the first user side device is interfered with by the PLC device in the first user side device.

S310. When the AF module determines that the network terminal in the first user side device is interfered with by the PLC device in the first user side device, step S312 is performed; or when the AF module determines that the network terminal in the first user side device is not interfered with by the PLC device in the first user side device, step S314 is performed.

A specific determining process of S310 is as follows:

monitoring, by the AF module, a third interference value of the network terminal in the first user side device, where the third interference value is a value of interference of the PLC device in the first user side device to the network terminal in the first user side device; and

when the AF module determines, based on the detected first interference value and third interference value of the network terminal in the first user side device, that a difference between the first interference value and the third interference value is greater than a threshold, determining, by the AF module, that the network terminal in the first user side device is interfered with by the PLC device in the first user side device.

S312. If determining that the network terminal in the first user side device is interfered with by the PLC device in the first user side device, the AF module controls the interference of the PLC device in the first user side device to the network terminal in the first user side device.

Specifically, the controlling the interference of the PLC device in the first user side device to the network terminal in the first user side device specifically includes: adjusting, by the AF module based on the first interference value and the third interference value, transmit power spectral density PSD of the PLC device in the first user side device and/or initiating online re-configuration OLR of the network terminal in the first user side device.

S314. When the AF module determines that the network terminal in the first user side device is not interfered with by the PLC device in the first user side device, the AF module does not need to adjust the PLC device in the first user side device and/or the NT in the first user side device.

Specifically, two user side devices in FIG. 1 are used as an example. A user side device 1 includes a network terminal 1 (NT 1), a PLC device 1-1, and a PLC device 1-2. The PLC device 1-1 is configured to send a signal, and the PLC device 1-2 is configured to receive a signal. The NT 1 includes a DSL remote end 1. A user side device 2 includes a network terminal 2 (NT 2), a PLC device 2-1, and a PLC device 2-2. The PLC device 2-1 is configured to send a signal, and the PLC device 2-2 is configured to receive a signal. The network terminal 2 includes a DSL remote end 2.

Specifically, a process of determining that the network terminal in the first user side device is interfered with by the PLC device in the second user side device is as follows:

All PLC devices in the two user side devices are silent; in this case, an SNR/QLN of each of the NT 1 and the NT 2 is measured.

The PLC device 1-1 in the user side device 1 sends a signal, the PLC device 1-2 in the user side device 1 receives the signal, and other PLC devices of the user side device 2 are silent; in this case, an SNR/QLN of each of the NT 1 and the NT 2 is measured.

The PLC device 1-2 in the user side device 1 sends a signal, the PLC device 1-1 in the user side device 1 receives the signal, and other PLC devices of the user side device 2 are silent; in this case, an SNR/QLN of each of the NT 1 and the NT 2 is measured.

The foregoing two steps are repeated for the PLC device 2-1 and the PLC device 2-2 in the user side device 2.

The AF module determines, based on a measurement result, whether an NT is interfered with by a neighboring PLC device.

In the following, an example in which the detected interference value is an SNR is used. For a monitoring result with the interference value being QLN, refer to similar processing of the SNR.

It is assumed that SNRs of the NT 1 and the NT 2 measured when PLC devices in all user side devices are silent are an SNR 1 and an SNR 2. An SNR of an NT measured when a PLC device in another user side device sends a signal is denoted as SNR i,j-k, where i represents an ith user NT i, and in this case, SNR i,j-k represents an SNR measured when a PLC device k at a home of a jth user sends a signal. For example, SNR 1,1-1 represents an SNR of an NT 1 measured when a PLC device 1 at a home of a user 1 sends a signal and all other PLC devices are silent. In this case, SNR 1,1-1, SNR 1,1-2, SNR 1,2-1, SNR 1,2-2, SNR 2,1-1, SNR 2,1-2, SNR 2,2-1, and SNR 2,2-2 can be separately obtained. A difference between the SNR 1 and each of the SNR 1,2-1 and the SNR 1,2-2 may be used to determine whether the NT 1 is interfered with by the PLC device of the user 2, for example, when (SNR 1 - SNR 1,2-1) is greater than a threshold, it is considered that the NT 1 is interfered with by one PLC device in the user side device 2. A specific threshold may be adjusted in an actual algorithm. Whether the user side device 2 is interfered with by a PLC device in the user side device 1 may be determined through same comparison.

Specifically, a process in which the AF module determines that the network terminal in the first user side device is interfered with by the PLC device in the first user side device is as follows:

If it is determined that the NT device in the user side device is not interfered with by a PLC device in another user side device, it may be fully considered that an adjustment inside a single user side device is required, and the AF module may perform the adjustment based on an algorithm procedure in the existing G.dpm standard.

An AF module adjustment policy at a user home is based on an SNR1/QLN1 measured when all PLC devices in the user side device are silent and an SNR2/QLN2 measured when a PLC device sends a signal. When performing transmit power spectral density (Power Spectral Density) PSD adjustment on a PLC device, the AF module may perform adjustment based on ΔSNR = SNK1 - SNR2 (dB) or ΔQLN = QLN2 - QLN1 (dB), for example, may reduce transmit PSD of the PLC device by ΔSNR or ΔQLN dB.

A process of interference between any user side device and each of the other user side devices is specifically as follows.

If it is determined that an NT device in the user side device is interfered with by a PLC device in another user side device, the AF module should consider an interference factor of the PLC device of the another user side device in an arbitration policy, for example, when transmit PSD adjustment is performed on the PLC device, an SNR with greatest impact is used for reference, and adjustment may be performed on an xDSL terminal device by using OLR.

When an NT device is interfered with by a neighboring user PLC device, the SNR i,j-k/QLN i,j-k measured previously and an SNR i/QLN i measured when all PLC devices are silent may be used to calculate a variable $\Delta SNRm = SNRi,j\_k - SNRi$ or $\Delta QLNm = QLNi - QLNi,j\_k$, and a maximum value max $\{\Delta SNRm\}$ or max$\{\Delta QLNm\}$ is used as a reference value (dB) required for performing adjustment on the PLC device. An excessive reduction to PSD of the PLC device causes an excessively low rate of the PLC device. To avoid this, the AF module may reduce the transmit PSD of the PLC device by [max{$\Delta$SNRm} - X] or [max{$\Delta$QLNm} - X]dB, and a DSL terminal device, namely, the NT initiates an OLR process to reduce a bit loading table of the NT by X/3 bits.

In addition, it is assumed that an NT 1 user does not support the G.dpm standard, that is, the AF module cannot directly exchange messages with the NT 1. In this case, if a PLC device of an NT 2 user affects the NT 1, a measurement result may be obtained from an xTU-O by using an interface $\varnothing_O$ between the AF module and the xTU-O. In this case, an SNR or QLN measurement feedback process supported by a DSL system may be used. Processing steps are as follows.

All PLC devices of the NT 2 user are made silent. The NT 1 and the NT 2 separately measure an SNR/QLN in this case. The AF module separately obtains the measured SNR/QLN.

When the PLC device 1 of the NT 2 sends a signal, the SNR/QLN of each of the NT 1 and the NT 2 is measured.

When the PLC device 2 of the NT 2 sends a signal, the SNR/QLN of each of the NT 1 and the NT 2 is measured.

The NT 1 determines, based on a comparison between the SNR/QLN obtained when all PLC devices are silent and the SNR/QLN obtained when the PLC device of the NT 2 user sends a signal, whether the NT 1 is interfered with by a PLC device in another user side device.

If the NT 1 is not interfered with by the PLC device in the another user side device, only the NT 2 user needs to be adjusted.

If the NT 1 is interfered with by the PLC device in the another user side device, it is necessary to consider performing OLR on the NT 1 to adjust a line parameter; and consider impact on the NT 1 user when the NT 2 user is adjusted, for example, $\Delta$SNR causing greatest impact is used to perform transmit PSD adjustment on the PLC device.

In particular, if a DSL technology is G.fast, power control usually needs to be performed during linear predictive coding of G.fast due to a channel feature of a high-frequency part. A power control matrix C is generally obtained through calculation based on a predictive coding coefficient P, and directly affects a rate of a G.fast line. In this embodiment, it is considered to use linear predictive coding for a G.fast user and use a PLC device for network expansion. In this case, interference generated by the PLC device may be combined by using a power control feature of G.fast, to reduce perception of the G.fast user. Specifically, steps may be as follows.

The AF module first comprehensively controls and measures impact of each PLC device on an SNR/QLN of each of different G.fast NTs.

For results obtained through measurement by a same NT user when different PLC devices perform sending, a minimum value is used if the results are SNRs and a maximum value is used if the results are QLN.

The SNR/QLN measured when the PLC device sends a signal is subtracted from an SNR/QLN measured by a corresponding NT user when the PLC device is silent, to obtain $\Delta$SNR/$\Delta$QLN, and $\Delta$SNR/$\Delta$QLN is sorted, for example, in descending order.

For a G.fast user, the DSL office side device may initiate TIGA to perform line parameter adjustment. In this case, a power control factor $Ci$ of a corresponding user may be reduced by $\Delta$SNR/N or $\Delta$QLN/N (dB), where N = 1, 2, 3, ..., and N may be adjusted based on a requirement.

The AF module may adjust transmit PSD of a corresponding PLC device based on the calculated $\Delta$SNR/$\Delta$QLN, for example, increase PSD of a corresponding PLC device by $\frac{N-1}{N}\Delta SNR$ or $\frac{N-1}{N}\Delta QLN$ (dB).

An advantage of such practice is that power control is combined, instead of merely reducing PSD of a PLC device. This may cause an excessive reduction to a rate of the PLC device, but some rate losses may be compensated by using power control of a G.fast system.

Therefore, if the DSL technology is G.fast as described in the foregoing solution, and non-linear predictive coding, for example, a QR-THP predictive coding technology, is used, a serial coding result of non-linear predictive coding causes a different coding sequence, and a line rate thereof may be different. In this case, intensity of interference of a PLC device to a G.fast user may be sorted in descending order. When non-linear predictive coding is performed on the G.fast line, non-linear predictive coding is performed according to a reversed order of the foregoing order, to increase a rate of a G.fast user strongly interfered with by the PLC device to some extent. In addition, PSD adjustment can still be performed on the PLC device based on the AF module policy and the above-mentioned algorithm. In this way, a non-linear predictive coding line order and interference of the PLC device are combined, so that rates of some G.fast users strongly interfered with by the PLC device can be increased, and perception of rate reductions by the G.fast users is reduced.

According to the data communication method provided in this embodiment, the method includes: the AF module monitors the first interference value and the second interference value of the network terminal in the first user side device, where the first interference value is the interference value that is of the network terminal in the first user side device and that is detected after the PLC devices on all the user side devices are disabled, and the second interference value is the value of the interference of the PLC device in the second user side device to the network terminal in the first user side device; and determines, based on the detected first interference value and second interference value of the network terminal in the first user side device, whether the network terminal in the first user side device is interfered with by the PLC device in the second user side device, so as to resolve a problem of interference between user side devices, and expand a single-user interference cancellation solution mentioned in an existing standard to a solution that can support multiuser interference cancellation, thereby improving reliability of data transmission between users.

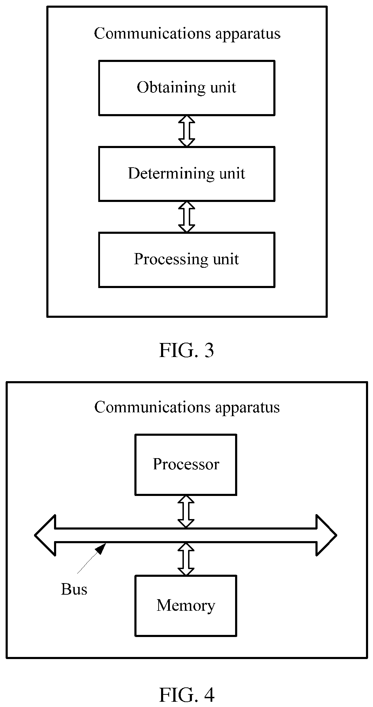

An embodiment of the present invention further provides a communications device. As shown in FIG. 3, the communications device includes:

> an obtaining unit, configured to monitor and obtain a first interference value and a second interference value of a network terminal in a first user side device that is connected to the communications device, where the first interference value is an interference value that is of the network terminal in the first user side device and that is detected after power line communication PLC devices in all user side devices are disabled, and the second interference value is a value of interference of a PLC device in a second user side device connected to the communications device to the network terminal in the first user side device; a determining unit, configured to determine, based on the detected first interference value and second interference value of the network terminal in the first user side device, whether the network terminal in the first user side device is interfered with by the PLC device in the second user side device; and a processing unit, configured to: when determining that the network terminal in the first user side device is interfered with by the PLC device in the second user side device, control the interference of the PLC device in the second user side device to the network terminal in the first user side device.

Further, the processing unit is specifically configured to: when a difference between the first interference value and the second interference value is greater than a threshold, determine that the network terminal in the first user side device is interfered with by the PLC device in the second user side device.

Optionally, the determining unit is further configured to determine whether the network terminal in the first user side device is interfered with by a PLC device in the first user side device.

Further, the obtaining unit is further configured to monitor a third interference value of the network terminal in the first user side device, where the third interference value is a value of interference of the PLC device in the first user side device to the network terminal in the first user side device.

Further, the processing unit is further configured to: when it is determined, based on the detected first interference value and third interference value of the network terminal in the first user side device, that a difference between the first interference value and the third interference value is greater than a threshold, determine that the network terminal in the first user side device is interfered with by the PLC device in the first user side device.

Further, the processing unit is further configured to: when determining that the network terminal in the first user side device is interfered with by the PLC device in the first user side device, control the interference of the PLC device in the first user side device to the network terminal in the first user side device.

Specifically, the processing unit is configured to adjust, based on the first interference value and the second interference value, transmit power spectral density PSD of the PLC device in the second user side device and/or initiate online re-configuration OLR of the network terminal in the first user side device.

Specifically, the processing unit is further configured to adjust, based on the first interference value and the third interference value, transmit power spectral density PSD of the PLC device in the first user side device and/or initiate online re-configuration OLR of the network terminal in the first user side device.

According to the communications device provided in this embodiment of the present invention, the communications device monitors the first interference value and the second interference value of the network terminal in the first user side device, where the first interference value is the interference value that is of the network terminal in the first user side device and that is detected after the PLC devices on all the user side devices are disabled, and the second interference value is the value of the interference of the PLC device in the second user side device to the network terminal in the first user side device; and determines, based on the detected first interference value and second interference value of the network terminal in the first user side device, whether the network terminal in the first user side device is interfered with by the PLC device in the second user side device, so as to resolve a problem of interference between user side devices, and expand a single-user interference cancellation solution mentioned in an existing standard to a solution that can support multiuser interference cancellation, thereby improving reliability of data transmission between users.

As shown in FIG. 1, an embodiment of the present invention further provides an access device. The access device includes a digital subscriber line DSL office side device and an arbitration function AF module. Specifically, for the access device, refer to the AF module of FIG. 1. Specifically, for a structure of the AF module, refer to the communications device shown in FIG. 3. For descriptions of a function of the AF module described in the structure in FIG. 3, and various functional modules in the embodiment corresponding to FIG. 3, reference may also be made to FIG. 2 and the description of the embodiment corresponding to the figure. Details are not described herein again.

By using the access device provided in this embodiment of the present invention, a problem of interference between user side devices is resolved, and a single-user interference cancellation solution mentioned in an existing standard is expanded to a solution that can support multiuser interference cancellation, thereby improving reliability of data transmission between users.

An embodiment of the present invention further provides a communications system. As shown in FIG. 1, the communications system includes an access device and at least two user side devices, where the access device includes a digital subscriber line DSL office side device and an arbitration function AF module, the at least two user side devices comprises a first user side device and a second user side device, the first user side device includes a network terminal, and the second user side device includes a power line communication PLC device, and the DSL office side device of the access device includes the communications device described in the foregoing embodiments. For details, refer to FIG. 1 to FIG. 3 and the specific descriptions of the embodiments corresponding to FIG. 1 to FIG. 3. Details are not described herein again.

Based on the communications system provided in this embodiment of the present invention, a problem of interference between user side devices is resolved, and a single-user interference cancellation solution mentioned in an existing standard is expanded to a solution that can support multiuser interference cancellation, thereby improving reliability of data transmission between users.

In addition, an embodiment of the present invention further provides a communications device. As shown in FIG. 4, the communications device includes a processor, a memory, and a bus system. The processor and the memory are connected by using bus system. The memory is configured to store an instruction. The processor is configured to execute the instruction stored in the memory. The processor is further configured to: monitor a first interference value and a second interference value of a network terminal in a first user side device, where the first interference value is an interference value that is of the network terminal in the first user side device and that is detected after PLC devices on all user side devices are disabled, and the second interference value is a value of interference of a PLC device in a second user side device to the network terminal in the first user side device; determine, based on the detected first interference value and second interference value of the network terminal in the first user side device, whether the network terminal in the first user side device is interfered with by the PLC device in the second user side device; and when determining that the network terminal in the first user side device is interfered with by the PLC device in the second user side device, control the interference of the PLC device in the second user side device to the network terminal in the first user side device.

In the foregoing embodiments, the descriptions of the embodiments have respective focuses. For a part that is not described in detail in an embodiment, reference may be made to related descriptions in other embodiments.

It should be noted that, to make the description brief, the foregoing method embodiments are expressed as a series of actions. However, a person skilled in the art should appreciate that the present invention is not limited to the described action sequence, because according to the present invention, some steps may be performed in other sequences or performed simultaneously. In addition, a person skilled in the art should also appreciate that all the embodiments described in the specification are embodiments as an example, and the related actions and modules are not necessarily mandatory to the present invention.

In the several embodiments provided in this application, it should be understood that the disclosed apparatus may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, each of the function units in embodiments of the present invention may be integrated into a processing unit, or exists independently, or two or more units are integrated into a unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device, and may specifically be a processor in the computer device) to perform all or some of the steps of the methods described in the embodiments of the present invention. The foregoing storage medium includes: any medium that can store program code, such as a USB flash drive, a removable hard disk, a magnetic disk, an optical disc, a read-only memory (ROM, Read-Only Memory), or a random access memory (RAM, Random Access Memory).

**Claims**

1. A data communication method, applied to a system that comprises an office side device and at least two user side devices connected to the office side device via digital subscriber lines, DSL lines, wherein the office side device comprises at least one arbitration function, AF, module, and in the at least two user side devices, a first user side device comprises a network terminal, and a second user side device comprises a power line communication, PLC, device; and the method comprises:

monitoring (300), by the AF module, a first interference value and a second interference value of the network terminal in the first user side device, wherein the first and the second interference value are signal-to-noise ratio value or a quiet-line-noise values, the first interference value is an interference value that is of the network terminal in the first user side device , and the second interference value is a value of interference of the PLC device in the second user side device to the network terminal in the first user side device;
determining (302), by the AF module based on the detected first interference value and second interference value of the network terminal in the first user side device, whether the network terminal in the first user side device is interfered with by the PLC device in the second user side device; and
when the AF module determines that the network terminal in the first user side device is interfered with by the PLC device in the second user side device, controlling (304) the interference of the PLC device in the second user side device to the network terminal in the first user side device by reducing, by the AF module based on the first interference value and on the second interference value, transmit power spectral density, PSD, of the PLC device in the second user side device;
wherein the first interference value is detected after PLC devices in all user side devices are disabled;
**characterized in that**
the DSL lines are G.fast lines;
wherein the method further comprises:
compensating for a rate loss caused by the reduction of the PSD by power control performed during linear predictive coding of G.fast.

2. The data communication method according to claim 1, wherein that the AF module determines (302) that the network terminal in the first user side device is interfered with by the PLC device in the second user side device specifically comprises:
when the difference between the first interference value and the second interference value is greater than a threshold, determining, by the AF module, that the network terminal in the first user side device is interfered with by the PLC device in the second user side device.

3. The data communication method according to claim 1, wherein the method further comprises:
determining (308) whether the network terminal in the first user side device is interfered with by a PLC device in the first user side device.

4. The data communication method according to claim 3, wherein the method further comprises:
monitoring, by the AF module, a third interference value of the network terminal in the first user side device, wherein the third interference value is a value of interference of the PLC device in the first user side device to the network terminal in the first user side device.

5. The method according to claim 4, wherein the determining (308) whether the network terminal in the first user side device is interfered with by a PLC device in the first user side device specifically comprises:
when the AF module determines, based on the detected first interference value and third interference value of the network terminal in the first user side device, that a difference between the first interference value and the third interference value is greater than a threshold, determining, by the AF module, that the network terminal in the first user side device is interfered with by the PLC device in the first user side device.

6. The method according to claim 3 or 5, wherein the method further comprises:
if the AF module determines that the network terminal in the first user side device is interfered with by the PLC device in the first user side device, controlling (312) the interference of the PLC device in the first user side device to the network terminal in the first user side device.

7. The data communication method according to claim 6, wherein the controlling (312) the interference of the PLC device in the first user side device to the network terminal in the first user side device specifically comprises:
adjusting, by the AF module based on the first interference value and the third interference value, transmit power spectral density, PSD, of the PLC device in the first user side device and/or initiating online re-configuration, OLR, of the network terminal in the first user side device.

8. A communications device, wherein the communications device comprises:

an obtaining unit, configured to monitor and obtain a first interference value and a second interference value of a network terminal in a first user side device that is connected to the communications device, via a digital subscriber line, DSL line, the first and the second interference value are signal-to-noise ratio value or a quiet-line-noise values, wherein the first interference value is an interference value that is of the network terminal in the first user side device, and the second interference value is a value of interference of a power line communication, PLC, device in a second user side device connected to the communications device via another DSL line to the network terminal in the first user side device;
a determining unit, configured to determine, based on the detected first interference value and second interference value of the network terminal in the first user side device, whether the network terminal in the first user side device is interfered with by the PLC device in the second user side device; and
a processing unit, configured to: when determining that the network terminal in the first user side device is interfered with by the PLC device in the second user side device, control the interference of the PLC device in the second user side device to the network terminal in the first user side device by being configured to reduce, based on the first interference value and on the second interference value, transmit power spectral density PSD of the PLC device in the second user side device;
wherein the first interference value is detected after PLC devices in all user side devices are disabled;
**characterized in that**
the DSL lines are G.fast lines;
wherein the processing unit is further configured to compensate for a rate loss caused by the reduction of the PSD by power control performed during linear predictive coding of G.fast.

9. The communications device according to claim 8, wherein the processing unit is specifically configured to: when a difference between the first interference value and the second interference value is greater than a threshold, determine that the network terminal in the first user side device is interfered with by the PLC device in the second user side device.

10. The communications device according to claim 8, wherein the determining unit is further configured to determine whether the network terminal in the first user side device is interfered with by a PLC device in the first user side device.

11. The communications device according to claim 10, wherein
the obtaining unit is further configured to monitor a third interference value of the network terminal in the first user side device, wherein the third interference value is a value of interference of the PLC device in the first user side device to the network terminal in the first user side device.

12. The communications device according to claim 11, wherein
the processing unit is further configured to: when it is determined, based on the detected first interference value and third interference value of the network terminal in the first user side device, that a difference between the first interference value and the third interference value is greater than a threshold, determine that the network terminal in the first user side device is interfered with by the PLC device in the first user side device.

13. The communications device according to claim 10 or 12, wherein
the processing unit is further configured to: when determining that the network terminal in the first user side device is interfered with by the PLC device in the first user side device, control the interference of the PLC device in the first user side device to the network terminal in the first user side device.

14. The communications device according to claim 12, wherein the processing unit is further configured to adjust, based on the first interference value and the third interference value, transmit power spectral density PSD of the PLC device in the first user side device and/or initiate online re-configuration OLR of the network terminal in the first user side device.

15. An access device, wherein the access device comprises a digital subscriber line, DSL, office side device and an arbitration function AF module, wherein the AF module comprises any communications device according to any one of claims 8 to 14.

16. A communications system, comprising an access device and at least two user side devices, wherein the access device comprises a digital subscriber line, DSL, office side device and an arbitration function AF module, the at least two user side devices comprises a first user side device and a second user side device, the first user side device comprises a network terminal, and the second user side device comprises a power line communication, PLC, device, and the DSL office side device of the access device comprises any communications device according to any one of claims 8 to 14.

**Patentansprüche**

1. Datenkommunikationsverfahren, angewandt auf ein System, das eine büroseitige Einrichtung und mindestens zwei benutzerseitige Einrichtungen umfasst, die über digitale Teilnehmeranschlüsse ("Digital Subscriber Lines", DSL-Leitungen) mit der büroseitigen Einrichtung verbunden sind, wobei die büroseitige Einrichtung mindestens ein Arbiterfunktions-, AF-Modul umfasst und in den mindestens zwei benutzerseitigen Einrichtungen eine erste benutzerseitige Einrichtung ein Netzwerkendgerät umfasst und eine zweite benutzerseitige Einrichtung eine "Powerline"-Kommunikationseinrichtung ("Power Line Communication"-, PLC-Einrichtung) umfasst und das Verfahren umfasst:

Überwachen (300) eines ersten Interferenzwerts und eines zweiten Interferenzwerts des Netzwerkendgeräts in der ersten benutzerseitigen Einrichtung durch das AF-Modul, wobei der erste und der zweite Interferenzwert ein Wert des Signal-Rausch-Verhältnisses oder ein Wert des Rauschens einer stummen Leitung ("Quiet Line Noise") sind, der erste Interferenzwert ein Interferenzwert zulasten des Netzwerkendgeräts in der ersten benutzerseitigen Einrichtung ist und der zweite Interferenzwert ein Interferenzwert der PLC-Einrichtung in der zweiten benutzerseitigen Einrichtung zulasten des Netzwerkendgeräts in der ersten benutzerseitigen Einrichtung ist;
Ermitteln (302) durch das AF-Modul, basierend auf dem detektierten ersten Interferenzwert und zweiten Interferenzwert des Netzwerkendgeräts in der ersten benutzerseitigen Einrichtung, ob das Netzwerkendgerät in der ersten benutzerseitigen Einrichtung durch die PLC-Einrichtung in der zweiten benutzerseitigen Einrichtung gestört wird; und
wenn das AF-Modul ermittelt, dass das Netzwerkendgerät in der ersten benutzerseitigen Einrichtung durch die PLC-Einrichtung in der zweiten benutzerseitigen Einrichtung gestört wird, Regeln (304) der Interferenz der PLC-Einrichtung in der zweiten benutzerseitigen Einrichtung zulasten des Netzwerkendgeräts in der ersten benutzerseitigen Einrichtung, indem durch das AF-Modul basierend auf dem ersten Interferenzwert und auf dem zweiten Interferenzwert die Sendeleistungsspektraldichte ("Power Spectral Density", PSD) der PLC-Einrichtung in der zweiten benutzerseitigen Einrichtung reduziert wird;
wobei der erste Interferenzwert detektiert wird, nachdem PLC-Einrichtungen in allen benutzerseitigen Einrichtungen deaktiviert worden sind;
**dadurch gekennzeichnet, dass**
die DSL-Leitungen G.fast-Leitungen sind;
wobei das Verfahren ferner umfasst:
Ausgleich eines durch die PSD-Reduktion verursachten Ratenverlusts mittels während der linearen prädiktiven Codierung ("Linear Predictive Coding") von G.fast durchgeführter Leistungsregelung.

2. Datenkommunikationsverfahren nach Anspruch 1, wobei das Ermitteln (302) durch das AF-Modul, dass das Netzwerkendgerät in der ersten benutzerseitigen Einrichtung durch die PLC-Einrichtung in der zweiten benutzerseitigen Einrichtung gestört wird, im Einzelnen umfasst:
wenn die Differenz zwischen dem ersten Interferenzwert und dem zweiten Interferenzwert größer ist als ein Schwellenwert, Feststellen durch das AF-Modul, dass das Netzwerkendgerät in der ersten benutzerseitigen Einrichtung durch die PLC-Einrichtung in der zweiten benutzerseitigen Einrichtung gestört wird.

3. Datenkommunikationsverfahren nach Anspruch 1, wobei das Verfahren ferner umfasst:
Ermitteln (308), ob das Netzwerkendgerät in der ersten benutzerseitigen Einrichtung durch eine PLC-Einrichtung in der ersten benutzerseitigen Einrichtung gestört wird.

**4.** Datenkommunikationsverfahren nach Anspruch 3, wobei das Verfahren ferner umfasst:
Überwachen eines dritten Interferenzwerts des Netzwerkendgeräts in der ersten benutzerseitigen Einrichtung durch das AF-Modul, wobei der dritte Interferenzwert ein Interferenzwert der PLC-Einrichtung in der ersten benutzerseitigen Einrichtung zulasten des Netzwerkendgeräts in der ersten benutzerseitigen Einrichtung ist.

**5.** Verfahren nach Anspruch 4, wobei das Ermitteln (308), ob das Netzwerkendgerät in der ersten benutzerseitigen Einrichtung durch eine PLC-Einrichtung in der ersten benutzerseitigen Einrichtung gestört wird, im Einzelnen umfasst:
wenn das AF-Modul basierend auf dem detektierten ersten Interferenzwert und dritten Interferenzwert des Netzwerkendgeräts in der ersten benutzerseitigen Einrichtung ermittelt, dass eine Differenz zwischen dem ersten Interferenzwert und dem dritten Interferenzwert größer als ein Schwellenwert ist: Feststellen durch das AF-Modul, dass das Netzwerkendgerät in der ersten benutzerseitigen Einrichtung durch die PLC-Einrichtung in der ersten benutzerseitigen Einrichtung gestört wird.

**6.** Verfahren nach Anspruch 3 oder 5, wobei das Verfahren ferner umfasst:
falls das AF-Modul feststellt, dass das Netzwerkendgerät in der ersten benutzerseitigen Einrichtung durch die PLC-Einrichtung in der ersten benutzerseitigen Einrichtung gestört wird, Regeln (312) der Interferenz der PLC-Einrichtung in der ersten benutzerseitigen Einrichtung zulasten des Netzwerkendgeräts in der ersten benutzerseitigen Einrichtung.

**7.** Datenkommunikationsverfahren nach Anspruch 6, wobei das Regeln (312) der Interferenz der PLC-Einrichtung in der ersten benutzerseitigen Einrichtung zulasten des Netzwerkendgeräts in der ersten benutzerseitigen Einrichtung im Einzelnen umfasst:
Anpassen, durch das AF-Modul basierend auf dem ersten Interferenzwert und dem dritten Interferenzwert, der Sendeleistungsspektraldichte ("Power Spectral Density", PSD) der PLC-Einrichtung in der ersten benutzerseitigen Einrichtung und/oder Initiieren der Online-Neukonfiguration ("Online Reconfiguration", OLR) des Netzwerkendgeräts in der ersten benutzerseitigen Einrichtung.

**8.** Kommunikationseinrichtung, wobei die Kommunikationseinrichtung umfasst:

eine Erhalteinheit, ausgelegt zum Überwachen und Erhalten eines ersten Interferenzwerts und eines zweiten Interferenzwerts eines Netzwerkendgeräts in einer ersten benutzerseitigen Einrichtung, die über einen digitalen Teilnehmeranschluss ("Digital Subscriber Line", DSL-Leitung) mit der Kommunikationseinrichtung verbunden ist,
wobei der erste und der zweite Interferenzwert ein Wert des Signal-Rausch-Verhältnisses oder ein Wert des Rauschens einer stummen Leitung ("Quiet Line Noise") sind, der erste Interferenzwert ein Interferenzwert zulasten des Netzwerkendgeräts in der ersten benutzerseitigen Einrichtung ist und der zweite Interferenzwert ein Interferenzwert einer "Powerline"-Kommunikationseinrichtung ("Power Line Communication"-, PLC-Einrichtung), die über eine andere DSL-Leitung mit der Kommunikationseinrichtung verbunden ist, zulasten des Netzwerkendgeräts in der ersten benutzerseitigen Einrichtung ist;
eine Bestimmungseinheit, ausgelegt zum Ermitteln, basierend auf dem detektierten ersten Interferenzwert und zweiten Interferenzwert des Netzwerkendgeräts in der ersten benutzerseitigen Einrichtung, ob das Netzwerkendgerät in der ersten benutzerseitigen Einrichtung durch die PLC-Einrichtung in der zweiten benutzerseitigen Einrichtung gestört wird; und
eine Verarbeitungseinheit, dafür ausgelegt, wenn festgestellt wird, dass das Netzwerkendgerät in der ersten benutzerseitigen Einrichtung durch die PLC-Einrichtung in der zweiten benutzerseitigen Einrichtung gestört wird, die Interferenz der PLC-Einrichtung in der zweiten benutzerseitigen Einrichtung zulasten des Netzwerkendgeräts in der ersten benutzerseitigen Einrichtung zu regeln, wobei die Verarbeitungseinheit dafür ausgelegt ist, basierend auf dem ersten Interferenzwert und dem zweiten Interferenzwert die Sendeleistungsspektraldichte ("Power Spectral Density", PSD) der PLC-Einrichtung in der zweiten benutzerseitigen Einrichtung zu reduzieren;
wobei der erste Interferenzwert detektiert wird, nachdem PLC-Einrichtungen in allen benutzerseitigen Einrichtungen deaktiviert worden sind;
**dadurch gekennzeichnet, dass**
die DSL-Leitungen G.fast-Leitungen sind;
wobei die Verarbeitungseinheit ferner ausgelegt ist zum Ausgleich eines durch die PSD-Reduktion verursachten Ratenverlusts mittels während der linearen prädiktiven Codierung ("Linear Predictive Coding") von G.fast durchgeführter Leistungsregelung.

**9.** Kommunikationseinrichtung nach Anspruch 8, wobei die Verarbeitungseinheit im Einzelnen dafür ausgelegt ist, wenn eine Differenz zwischen dem ersten Interferenzwert und dem zweiten Interferenzwert größer ist als ein Schwellenwert, festzustellen, dass das Netzwerkendgerät in der ersten benutzerseitigen Einrichtung durch die PLC-Einrichtung in der zweiten benutzerseitigen Einrichtung gestört wird.

10. Kommunikationseinrichtung nach Anspruch 8, wobei die Bestimmungseinheit ferner dafür ausgelegt ist, zu ermitteln, ob das Netzwerkendgerät in der ersten benutzerseitigen Einrichtung durch die PLC-Einrichtung in der ersten benutzerseitigen Einrichtung gestört wird.

11. Kommunikationseinrichtung nach Anspruch 10, wobei
die Erhalteinheit ferner ausgelegt ist zum Überwachen eines dritten Interferenzwerts des Netzwerkendgeräts in der ersten benutzerseitigen Einrichtung, wobei der dritte Interferenzwert ein Interferenzwert der PLC-Einrichtung in der ersten benutzerseitigen Einrichtung zulasten des Netzwerkendgeräts in der ersten benutzerseitigen Einrichtung ist.

12. Kommunikationseinrichtung nach Anspruch 11, wobei
die Verarbeitungseinheit ferner dafür ausgelegt ist, wenn basierend auf dem detektierten ersten Interferenzwert und dritten Interferenzwert des Netzwerkendgeräts in der ersten benutzerseitigen Einrichtung ermittelt wird, dass eine Differenz zwischen dem ersten Interferenzwert und dem dritten Interferenzwert größer als ein Schwellenwert ist, festzustellen, dass das Netzwerkendgerät in der ersten benutzerseitigen Einrichtung durch die PLC-Einrichtung in der ersten benutzerseitigen Einrichtung gestört wird.

13. Kommunikationseinrichtung nach Anspruch 10 oder 12, wobei
die Verarbeitungseinheit ferner dafür ausgelegt ist, wenn festgestellt wird, dass das Netzwerkendgerät in der ersten benutzerseitigen Einrichtung durch die PLC-Einrichtung in der ersten benutzerseitigen Einrichtung gestört wird, die Interferenz der PLC-Einrichtung in der ersten benutzerseitigen Einrichtung zulasten des Netzwerkendgeräts in der ersten benutzerseitigen Einrichtung zu regeln.

14. Kommunikationseinrichtung nach Anspruch 12, wobei die Verarbeitungseinheit ferner dafür ausgelegt ist, basierend auf dem ersten Interferenzwert und dem dritten Interferenzwert, die Sendeleistungsspektraldichte ("Power Spectrum Density", PSD) der PLC-Einrichtung in der ersten benutzerseitigen Einrichtung anzupassen und/oder die Online-Neukonfiguration ("Online Reconfiguration", OLR) des Netzwerkendgeräts in der ersten benutzerseitigen Einrichtung zu initiieren.

15. Zugangseinrichtung, wobei die Zugangseinrichtung eine büroseitige Einrichtung eines digitalen Teilnehmeranschlusses ("Digital Subscriber Line", DSL) und ein Arbiterfunktionsmodul (AF-Modul) umfasst, wobei das AF-Modul eine Kommunikationseinrichtung nach einem der Ansprüche 8 bis 14 umfasst.

16. Kommunikationssystem, umfassend eine Zugangseinrichtung und mindestens zwei benutzerseitige Einrichtungen, wobei die Zugangseinrichtung eine büroseitige Einrichtung eines digitalen Teilnehmeranschlusses ("Digital Subscriber Line", DSL), und ein Arbiterfunktionsmodul (AF-Modul) umfasst, die mindestens zwei benutzerseitigen Einrichtungen eine erste benutzerseitige Einrichtung und eine zweite benutzerseitige Einrichtung umfassen, die erste benutzerseitige Einrichtung ein Netzwerkendgerät umfasst und die zweite benutzerseitige Einrichtung eine "Powerline"-Kommunikationseinrichtung ("Power Line Communication"-, PLC-Einrichtung) umfasst und die büroseitige DSL-Einrichtung der Zugangseinrichtung eine Kommunikationseinrichtung nach einem der Ansprüche 8 bis 14 umfasst.

**Revendications**

1. Procédé de communication de données, appliqué à un système qui comporte un dispositif côté central et au moins deux dispositifs côté utilisateur connectés au dispositif côté central par l'intermédiaire de lignes numériques d'abonnés, lignes DSL, le dispositif côté central comportant au moins un module de fonction d'arbitrage, AF, et parmi lesdits au moins deux dispositifs côté utilisateur, un premier dispositif côté utilisateur comportant un terminal de réseau, et un deuxième dispositif côté utilisateur comportant un dispositif de communication par courants porteurs en ligne, CPL ; et le procédé comportant :

la surveillance (300), par le module d'AF, d'une première valeur de brouillage et d'une deuxième valeur de brouillage du terminal de réseau dans le premier dispositif côté utilisateur, la première et la deuxième valeur de brouillage étant une valeur de rapport signal-bruit ou une valeur de bruit sur ligne au repos, la première valeur de brouillage étant une valeur de brouillage qui appartient au terminal de réseau dans le premier dispositif côté utilisateur, et la deuxième valeur de brouillage étant une valeur de brouillage du dispositif de CPL dans le deuxième dispositif côté utilisateur vis-à-vis du terminal de réseau dans le premier dispositif côté utilisateur ;
la détermination (302), par le module d'AF d'après la première valeur de brouillage et la deuxième valeur de brouillage détectées du terminal de réseau dans le premier dispositif côté utilisateur, du fait que le terminal de réseau dans le premier dispositif côté utilisateur subit ou non un brouillage de la part du dispositif de CPL dans le deuxième dispositif côté utilisateur ; et
lorsque le module d'AF détermine que le terminal de réseau dans le premier dispositif côté utilisateur subit un brouillage de la part du dispositif de CPL dans le deuxième dispositif côté utilisateur, la régulation (304) du brouillage du dispositif de CPL dans le deuxième dispositif côté utilisateur vis-à-vis du terminal de réseau dans le premier dispositif côté utilisateur en faisant réduire, par le module d'AF d'après la première valeur de brouillage et la deuxième valeur de brouillage, une densité spectrale de puissance, DSP, d'émission du dispositif de CPL dans le deuxième dispositif côté utilisateur ;
la première valeur de brouillage étant détectée après que les dispositifs de CPL dans tous les dispositifs côté utilisateur ont été désactivés ;
**caractérisé en ce que**
les lignes DSL sont des lignes G.fast ;
le procédé comportant en outre :
la compensation d'une perte de débit causée par la réduction de la DSP par une régulation de puissance effectuée pendant un codage prédictif linéaire de G.fast.

2. Procédé de communication de données selon la revendication 1, la détermination (302) par le module d'AF du fait que le terminal de réseau dans le premier dispositif côté utilisateur subit un brouillage de la part du dispositif de CPL dans le deuxième dispositif côté utilisateur comportant spécifiquement :
lorsque la différence entre la première valeur de brouillage et la deuxième valeur de brouillage est supérieure à un seuil, la détermination, par le module d'AF, du fait que le terminal de réseau dans le premier dispositif côté utilisateur subit un brouillage de la part du dispositif de CPL dans le deuxième dispositif côté utilisateur.

3. Procédé de communication de données selon la revendication 1, le procédé comportant en outre :
la détermination (308) du fait que le terminal de réseau dans le premier dispositif côté utilisateur subit ou non un brouillage de la part d'un dispositif de CPL dans le premier dispositif côté utilisateur.

4. Procédé de communication de données selon la revendication 3, le procédé comportant en outre :
la surveillance, par le module d'AF, d'une troisième valeur de brouillage du terminal de réseau dans le premier dispositif côté utilisateur, la troisième valeur de brouillage étant une valeur de brouillage du dispositif de CPL dans le premier dispositif côté utilisateur vis-à-vis du terminal de réseau dans le premier dispositif côté utilisateur.

5. Procédé selon la revendication 4, la détermination (308) du fait que le terminal de réseau dans le premier dispositif côté utilisateur subit ou non un brouillage de la part d'un dispositif de CPL dans le premier dispositif côté utilisateur comportant spécifiquement ;
lorsque le module d'AF détermine, d'après la première valeur de brouillage et la troisième valeur de brouillage détectées du terminal de réseau dans le premier dispositif côté utilisateur, qu'une différence entre la première valeur de brouillage et la troisième valeur de brouillage est supérieure à un seuil, la détermination, par le module d'AF, du fait que le terminal de réseau dans le premier dispositif côté utilisateur subit un brouillage de la part du dispositif de CPL dans le premier dispositif côté utilisateur.

6. Procédé selon la revendication 3 ou 5, le procédé comportant en outre :
si le module d'AF détermine que le terminal de réseau dans le premier dispositif côté utilisateur subit un brouillage de la part du dispositif de CPL dans le premier dispositif côté utilisateur, la régulation (312) du brouillage du dispositif de CPL dans le premier dispositif côté utilisateur vis-à-vis du terminal de réseau dans le premier dispositif côté utilisateur.

7. Procédé de communication de données selon la revendication 6, la régulation (312) du brouillage du dispositif de CPL dans le premier dispositif côté utilisateur vis-à-vis du terminal de réseau dans le premier dispositif côté utilisateur comportant spécifiquement :
le réglage, par le module d'AF d'après la première valeur de brouillage et la troisième valeur de brouillage, de la densité spectrale de puissance, DSP, d'émission du dispositif de CPL dans le premier dispositif côté utilisateur et/ou le lancement d'une reconfiguration en ligne, OLR, du terminal de réseau dans le premier dispositif côté utilisateur.

8. Dispositif de communications, le dispositif de communications comportant :

une unité d'obtention, configurée pour surveiller et obtenir une première valeur de brouillage et une deuxième valeur de brouillage d'un terminal de réseau dans un premier dispositif côté utilisateur qui est connecté au dispositif de communications, par l'intermédiaire d'une ligne numérique d'abonné, ligne DSL, la première et la deuxième valeur de brouillage étant une valeur de rapport signal-bruit ou une valeur de bruit sur ligne au repos, la première valeur de brouillage étant une valeur de brouillage qui appartient au terminal de réseau dans le premier dispositif côté utilisateur, et la deuxième valeur de brouillage étant une valeur de brouillage d'un dispositif de communication par courants porteurs en ligne, CPL, dans un deuxième dispositif côté utilisateur connecté au dispositif de communications par l'intermédiaire d'une autre ligne DSL vis-à-vis du terminal de réseau dans le premier dispositif côté utilisateur ;

une unité de détermination, configurée pour déterminer, d'après la première valeur de brouillage et la deuxième valeur de brouillage détectées du terminal de réseau dans le premier dispositif côté utilisateur, si le terminal de réseau dans le premier dispositif côté utilisateur subit un brouillage de la part du dispositif de CPL dans le deuxième dispositif côté utilisateur ; et

une unité de traitement, configurée pour : lorsqu'il est déterminé que le terminal de réseau dans le premier dispositif côté utilisateur subit un brouillage de la part du dispositif de CPL dans le deuxième dispositif côté utilisateur, réguler le brouillage du dispositif de CPL dans le deuxième dispositif côté utilisateur vis-à-vis du terminal de réseau dans le premier dispositif côté utilisateur en étant configurée pour réduire, d'après la première valeur de brouillage et la deuxième valeur de brouillage, une densité spectrale de puissance, DSP, d'émission du dispositif de CPL dans le deuxième dispositif côté utilisateur ;

la première valeur de brouillage étant détectée après que les dispositifs de CPL dans tous les dispositifs côté utilisateur ont été désactivés ; **caractérisé en ce que**

les lignes DSL sont des lignes G.fast ;

l'unité de traitement étant en outre configurée pour compenser une perte de débit causée par la réduction de la DSP par une régulation de puissance effectuée pendant un codage prédictif linéaire de G.fast.

9. Dispositif de communications selon la revendication 8, l'unité de traitement étant spécifiquement configurée pour : lorsqu'une différence entre la première valeur de brouillage et la deuxième valeur de brouillage est supérieure à un seuil, déterminer que le terminal de réseau dans le premier dispositif côté utilisateur subit un brouillage de la part du dispositif de CPL dans le deuxième dispositif côté utilisateur.

10. Dispositif de communications selon la revendication 8, l'unité de détermination étant en outre configurée pour déterminer si le terminal de réseau dans le premier dispositif côté utilisateur subit un brouillage de la part d'un dispositif de CPL dans le premier dispositif côté utilisateur.

11. Dispositif de communications selon la revendication 10,

l'unité d'obtention étant en outre configurée pour surveiller une troisième valeur de brouillage du terminal de réseau dans le premier dispositif côté utilisateur, la troisième valeur de brouillage étant une valeur de brouillage du dispositif de CPL dans le premier dispositif côté utilisateur vis-à-vis du terminal de réseau dans le premier dispositif côté utilisateur.

12. Dispositif de communications selon la revendication 11,

l'unité de traitement étant en outre configurée pour : lorsqu'il est déterminé, d'après la première valeur de brouillage et la troisième valeur de brouillage détectées du terminal de réseau dans le premier dispositif côté utilisateur, qu'une différence entre la première valeur de brouillage et la troisième valeur de brouillage est supérieure à un seuil, déterminer que le terminal de réseau dans le premier dispositif côté utilisateur subit un brouillage de la part du dispositif de CPL dans le premier dispositif côté utilisateur.

13. Dispositif de communications selon la revendication 10 ou 12,

l'unité de traitement étant en outre configurée pour : lorsqu'il est déterminé que le terminal de réseau dans le premier dispositif côté utilisateur subit un brouillage de la part du dispositif de CPL dans le premier dispositif côté utilisateur, réguler le brouillage du dispositif de CPL dans le premier dispositif côté utilisateur vis-à-vis du terminal de réseau dans le premier dispositif côté utilisateur.

14. Dispositif de communications selon la revendication 12, l'unité de traitement étant en outre configurée pour régler, d'après la première valeur de brouillage et la troisième valeur de brouillage, une densité spectrale de puissance, DSP, d'émission du dispositif de CPL dans le premier dispositif côté utilisateur et/ou lancer une reconfiguration en ligne OLR du terminal de réseau dans le premier dispositif côté utilisateur.

15. Dispositif d'accès, le dispositif d'accès comportant un dispositif de ligne numérique d'abonné, DSL, côté central et un module de fonction d'arbitrage, AF, le module d'AF comportant un quelconque dispositif de communications selon l'une quelconque des revendications 8 à 14.

16. Système de communications, comportant un dispositif d'accès et au moins deux dispositifs côté utilisateur, le dispositif d'accès comportant un dispositif de ligne numérique d'abonné, DSL, côté central et un module de fonction d'arbitrage, AF, lesdits au moins deux dispositifs côté utilisateur comportant un premier dispositif côté utilisateur et un deuxième dispositif côté utilisateur, le premier dispositif côté utilisateur comportant un terminal de réseau, et le deuxième dispositif côté utilisateur comportant un dispositif de communication par courants porteurs en ligne, CPL, et le dispositif de DSL côté central du dispositif d'accès comportant un quelconque dispositif de communications selon l'une quelconque des revendications 8 à 14.

FIG. 1

FIG. 2

Communications apparatus

Obtaining unit

Determining unit

Processing unit

FIG. 3

Communications apparatus

Processor

Bus

Memory

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140369430 A1